# EUROPÄISCHE PATENTANMELDUNG

(11) **EP 1 602 537 A2**
(43) Veröffentlichungstag der Anmeldung: **07.12.2005**
(21) Anmeldenummer: 05011929.6
(22) Anmeldetag: 02.06.2005
(51) Int. Cl.: B60R 21/34

(54) **Kraftfahrzeugfront mit Mitten-Abdeckung im Spoilerbereich zum verbesserten Kollisionsschutz von Fussgängern**

(30) Priorität: 03.06.2004 DE 102004027169
(71) Anmelder: DaimlerChrysler AG, 70567 Stuttgart (DE); Decoma (Germany) GmbH, 66280 Sulzbach (DE)
(72) Erfinder: Dehn, Andreas, Dr., 72074 Tübingen (DE); Maier, Hans-Peter, 72202 Nagold (DE); Mayer, Markus, 70190 Stuttgart (DE); Petersen, Hans-Olaf, 70199 Stuttgart (DE); Rösch, Jochen, 71034 Böblingen (DE); Sand, Johannes, 70597 Stuttgart (DE); Zacheiss, Sven, 63924 Kleinheubach (DE)

(57) **Zusammenfassung**

Front eines Kraftfahrzeugs mit einem Stoßfänger (1), mit einer Stoßfängerverkleidung (2), welche sich bis in einen unterhalb des Stoßfängers (1) liegenden Spoilerbereich (3) hin erstreckt, und mit einer Abdeckung (4), welche als Zusatzteil mindestens im mittleren Spoilerbereich (3) an der Stoßfängerverkleidung (2) montierbar ist, wobei die Abdeckung (4) eine bezogen auf das Kraftfahrzeug nach unten und nach hinten hin weisende Verlängerung (5) aufweist, welche sich mindestens abschnittsweise an der Innenseite der Stoßfängerverkleidung (2) zu deren direkter Anbindung und Versteifung flächig und im wesentlichen formschlüssig erstreckt.

## Beschreibung

Die Erfindung betrifft eine Front eines Kraftfahrzeugs mit einem Stoßfänger und mit einer Stoßfängerverkleidung sowie einer Abdeckung, die im unteren mittigen Spoilerbereich der Fahrzeugfront vorgesehen ist, gemäß den Merkmalen des Oberbegriffs des Anspruchs 1.

Die Erfindung betrifft insbesondere eine Front eines Kraftfahrzeugs, welche zur Vermeidung einer Verletzung von Fußgängern im Falle eines frontalen Aufpralls weiter verbessert ist. Die heutigen und zukünftigen Sicherheitsanforderungen hinsichtlich der Frontkollisionen mit Fußgängern machen es erforderlich, die diesbezüglichen Maßnahmen zu verstärken. Für die äußere Sicherheit von Kraftfahrzeugen wurden daher Tests und Kriterien aufgestellt: Beim Bein-Impaktortest sind der Kniebiegewinkel und der Kniescherweg beispielsweise die maßgeblichen Sicherheitskriterien, welche einzuhalten bzw. zu unterbieten sind. Ein möglichst geringer Kniebiegewinkel hat zum Zweck, dass ein Fußgänger beim Aufprall auf die Front nicht unter das Fahrzeug gerät, sondern die Beine und insbesondere die Unterschenkel vielmehr vom Fahrzeug zurückgestoßen werden, sodass eine Abrollbewegung des Körpers des Fußgängers über die Motorhaube des Fahrzeuges ermöglicht wird. Zu diesem Zweck ist es erforderlich, dass vor allem im Unterschenkel-Bereich ein Rückstoßen der Beine eines Fußgängers unter Vermeidung eines Eindringens in die sich verformende Karosserie erreicht wird. Es sind bei heutigen Fahrzeugen schon diesbezüglich Bemühungen unternommen worden, die darin bestanden, einen zusätzlichen Biegeträger im Spoilerbereich mit vorgeschaltetem Pralldämpferschaum zusätzlich zum eigentlichen Stoßfänger einzusetzen. Dies führt jedoch aufgrund der zusätzlichen Teilezahl und Montageschritte zu erhöhten Kosten.

Aus der DE 101 12 424 A1 ist eine Frontpartie eines Kraftfahrzeugs bekannt, die einen Stoßfänger und ein Luftführungsteil aufweist. Das Luftführungsteil ist hier derart flügelförmig vorragend geformt, dass es bei einem Frontalaufprall die Fahrzeugfront im Bereich der Lufteinströmöffnungen eines Kühlers zusätzlich versteift. Durch die zusätzliche Versteifung des Lüfterbereiches mittels des Luftführungsteils wird ein vom Fahrzeug erfasster Fußgänger im Unterschenkel-Bereich stärker abgestoßen, sodass die Abrollbewegung des Fußgängers über die Motorhaube eingeleitet wird. Die Versteifung mittels des vorragenden Flügelabschnitts ist effektiv, jedoch auch raumeinnehmend und nur bei ausreichend Platz zwischen dem Luftführungsteil und dem Spoilerbereich der Karosserie einsetzbar.

Die vorliegende Erfindung hat demgegenüber als Aufgabe, eine Front eines Kraftfahrzeugs bereitzustellen, welche insbesondere im Hinblick auf die äußere Sicherheit von Fußgängern weiter verbessert ist, ohne einen erhöhten Raumbedarf bzw. eine erhöhte Teilezahl mit sich zu bringen.

Diese Aufgabe wird mit der Front eines Kraftfahrzeugs gemäß den Merkmalen des Anspruchs 1 gelöst. Vorteilhafte Ausgestaltungen und Weiterbildungen der Erfindung sind Gegenstand der abhängigen Ansprüche.

Die neuartige Front eines Kraftfahrzeugs ist mit einem Stoßfänger und einer Stoßfängerverkleidung versehen, welche sich mindestens bis unterhalb des Stoßfängers in einen Spoilerbereich hin erstreckt und die mit einer Abdeckung versehen ist, welche als Zusatzteil im mittleren Spoilerbereich an der Stoßfängerverkleidung montierbar ist. Die erfindungsgemäße Kraftfahrzeugfront ist dadurch gekennzeichnet, dass die Abdeckung eine bezogen auf das Kraftfahrzeug nach unten und nach hinten hin weisende Verlängerung aufweist, welche mindestens abschnittsweise an der Innenseite der Stoßfängerverkleidung zu deren direkter Anbindung und Versteifung flächig und im Wesentlichen formschlüssig anliegt. Die Abdeckung ist vorzugsweise eine Abdeckung für eine Kühllufteintrittsöffnung im mittleren unteren Spoilerbereich, sie kann jedoch auch eine andere Art einer frontalen Abdeckung sein, solange sie sich im Unterschenkel-Bereich von Fußgängern befindet. Die Abdeckung ist gemäß der vorliegenden Erfindung mit einer nach hinten weisenden Verlängerung formentsprechend zur Innenseite einer Stoßfängerverkleidung versehen, die sich derart mindestens abschnittsweise flächig entlang der Innenkontur erstreckt, dass die Außenhaut der Karosserie (bzw. Stoßfängerverkleidung) in dem Unterschenkel-Bereich von Fußgängern relativ großflächig versteift wird. Unter Verlängerung wird im Rahmen dieser Erfindung ein Abschnitt verstanden, der sich auch außerhalb des eigentlichen Bereichs der Abdeckung zur frontalen, bereichsweisen Versteifung des Spoilerbereichs erstreckt. Diese Versteifung durch einen integralen Verlängerungsabschnitt einer ohnehin vorzusehenden frontalen Abdeckung hat außerdem den Vorteil, dass sie wenig raumeinnehmend ist. Die mindestens abschnittsweise flächige Erstreckung an der Innenwand der Außenkontur der Karosserie vermeidet in den Innenraum ragende Abschnitte oder Elemente. Gemäß einem vorteilhaften Aspekt der Erfindung liegt die Verlängerung an der Innenseite der Frontverkleidung im Spoilerbereich an. Durch die formentsprechende, mindestens abschnittsweise vorgesehene flächige Erstreckung der Verlängerung an der Innenseite der Stoßfängerverkleidung wird eine Art sandwichförmige Verbundstruktur in diesem Bereich bereitgestellt, die durch geeignete Auswahl von Materialien schon aufgrund ihrer Verbindung zu einer erhöhten Versteifung führt, als wenn lediglich an einer Stoßfängerverkleidung selbst innenseitige Versteifungsrippen vorgesehen werden würden. Außerdem hat die mindestens abschnittsweise vorgesehene, flächige und formentsprechende Erstreckung eine direkte Anbindung der Abdeckung an der Innenseite der Stoßfängerverkleidung bzw. einem dahinter liegenden Integralträger den Vorteil, dass die frontale Versteifung im Unterschenkel-Bereich hierdurch großflächig und nicht lediglich punktuell ist. Es bestehen daher keine Lücken in der Versteifung im Bereich der Unterschenkel von Fußgängern. Ein verletzungskritisches Eindringen eines Unterschenkels beim Beinaufprall auf Grund der Verformung der Frontverkleidung der Karosserie wird somit effektiv in jedem Bereich der Frontpartie verhindert. Die hierdurch erreichbaren maximalen Kniebiegewinkel sind daher bei der erfindungsgemäßen Kraftfahrzeugfront weiter verringert. Zukünftige Sicherheitsanforderungen können somit diesbezüglich leicht erreicht und eingehalten werden, ohne separate Versteifungs-Zusatzelemente zu erfordern.

Nach einer vorteilhaften Ausgestaltung der Erfindung ist die Stoßfängerverkleidung an der Innenseite mit vorragenden und längs (parallel) zur Fahrzeug-Längsachse gerichteten Versteifungsrippen versehen. Die Versteifungsrippen sind vorzugsweise im vorderen unteren Bereich der Stoßfängerverkleidung vorgesehen. Die Versteifungsrippen erhöhen noch die Wirksamkeit der Versteifung im Zusammenwirken mit den flächig anliegenden Abschnitten der Verlängerung der Abdeckung in diesem Bereich. Die Versteifungsrippen an der Innenseite der Stoßfängerverkleidung können als parallele, longitudinale Rippen integral aus dem Material der Stoßfängerverkleidung hergestellt sein. Die flächig und formentsprechend an der Innenseite anliegenden Versteifungs-Abschnitte der Verlängerung der erfindungsgemäßen Abdeckung können vorzugsweise zwischen den Versteifungsrippen der Stoßfängerverkleidung und in ihrem Abstand auf diese angepasst vorgesehen sein. Auf diese Weise ergibt sich auch eine flächige seitliche Anlage von seitlichen Flächen der versteifenden Verlängerung der Abdeckung nach hinten, die ebenfalls aufgrund des "sandwich"-artigen Verbunds eine weitere Erhöhung der Steifigkeit großflächig in dem Unterschenkel-Bereich bewirken. Die Anbindung und Montage der Abdeckung und ihrer Verlängerung an der Stoßfängerverkleidung bzw. an angrenzenden Trägerelementen der Fahrzeugkarosserie kann auf jede dem Fachmann hierfür bekannte Art und Weise und insbesondere durch eine Spreiz-Nietverbindung erfolgen. Auf diese Weise können materialunabhängig die Teile auf leichte Art und Weise aneinandergefügt werden.

Nach einer weiteren vorteilhaften Ausgestaltung der Erfindung weist die Verlängerung der Abdeckung selbst zusätzliche Versteifungsrippen an ihrer Oberseite auf. Die Versteifungsrippen können insbesondere im Knickbereich, das heißt im Übergang vom vordeeren Spoilerbereich zu dem angrenzenden Bodenbereich, vorgesehen sein. Die Versteifungsrippen sind dann als überbrückende, vorragende Materialabschnitte realisierbar. Dies ergibt eine zusätzliche Versteifung bei geringem Gewicht der Abdeckung mitsamt ihrer Verlängerung. Die frontale Abdeckung und der nach hinten und nach unten weisende Verlängerungsabschnitt bilden im Querschnitt ein L-förmiges Form-Element, das schon aufgrund dieser Form eine relativ gute Eigensteifigkeit aufweist. Wenn an der Knickstelle des L überbrückende Längsrippen zusätzlich an der Oberseite vorgesehen sind, ist die Steifigkeit noch weiter verbessert.

Nach einer weiteren vorteilhaften Ausgestaltung der Erfindung ist die Verlängerung der Abdeckung zur Versteifung mit Hohlprofilabschnitten versehen. Die Hohlprofilabschnitte können in dem Verlängerungsabschnitt der Abdeckung selbst gebildet sein oder im Zusammenwirken mit der Stoßfängerverkleidung bzw. anderen Karosserieteilen. Die Hohlprofilabschnitte sind vorzugsweise in Längsrichtung gemäß der Längsachse des Kraftfahrzeugs ausgerichtet, sodass eine zusätzliche Versteifung ähnlich wie bei herkömmlichen Längsträgern, jedoch direkt und formschlüssig in Anlage an dem frontalen unteren Spoilerbereich der Fahrzeugkarosserie bereitgestellt wird.

Nach einer weiteren vorteilhaften Ausgestaltung der Erfindung ist die Abdeckung ein Kühllufteinlassgitter, das nach hinten mit einer Verlängerung derart versehen ist, dass ihre direkte Anbindung an einen Integralträger zur Verbesserung der AbStützung bewirkt wird. Ein Kühllufteinlassgitter wird herkömmlicherweise als zusätzliches Teil an einer dafür vorgesehenen Öffnung im Frontbereich des Fahrzeugs montiert. Dieses ohnehin vorzusehende Bauteil wird erfindungsgemäß mit einer Verlängerung nach hinten und Abstützabschnitten an Trägerelementen der Karosserie vorgesehen. Die erfindungsgemäße Abdeckung übernimmt neben dem Verschließen der Kühllufteinlassöffnung eine weitere Funktion, nämlich die einer möglichst einfachen und wenig raumeinnehmenden und dabei dennoch relativ großflächigen Versteifung des Unterschenkel-Bereichs des Fußgängers an der Front des Kraftfahrzeugs.

Nach einer weiteren vorteilhaften Ausgestaltung der Erfindung sind mindestens an der nach hinten weisenden Verlängerung Befestigungslöcher für die Befestigung an der Stoßfängerverkleidung und/oder an Trägerelementen der Karosserie vorgesehen. Die Befestigungslöcher können beispielsweise zur Befestigung von Schrauben oder Spreiznieten oder jedes andere hierfür dem Fachmann bekannte Mittel dienen.

Nach einer weiteren vorteilhaften Ausgestaltung der Erfindung ist die nach hinten weisende Verlängerung zur Versteifung des betreffenden Bereichs mit Abstützabschnitten zur Abstützung an einem rückseitigen Träger der Karosserie versehen. Neben der durch die Eigensteifigkeit der Abdeckung erhöhten Verformungsfestigkeit des Frontbereichs wird so eine zusätzliche rückseitige Abstützung bereitgestellt, sodass eine Verformung im frontalen Spoilerbereich noch wirksamer vermieden wird. Im Zusammenwirken mit der Stoßfängerverkleidung bietet die erfindungsgemäße Abdeckung mit nach hinten weisender Verlängerung und Abstützung an einem Träger im Motorraum eine Art großflächig und über die gesamte Breite vorhandenen Aufprall-Rammbock, sodass ein dort auftreffender Unterschenkel wirksam weggestoßen wird, und zwar dies ohne dass raumeinnehmende oder aufwendige zusätzliche Bauteile erforderlich wären.

Die erfindungsgemäße Abdeckung mitsamt ihrer Verlängerung kann aus jedem dem Fachmann hierfür bekannten Material und auf jede hierfür bekannte Herstellungsart realisiert sein. Insbesondere können die Form und die Materialien derart gewählt werden, dass eine gewisse elastische Verformbarkeit zumindest in den Abstützabschnitten vorhanden ist. Auf diese Weise wird der Rückpralleffekt am Unterschenkel noch weiter erhöht. Die erfindungsgemäße Abdeckung kann beispielsweise in Form eines Spritzgussteils aus Kunststoff hergestellt sein. Alternativ kann die Abdeckung mitsamt ihrer entsprechend der Innenseite der Fahrzeugfront ausgeformten Verlängerung als ein tiefgezogenes Struktur-Blechteil aus Metallblech realisiert sein.

Weitere Vorteile und Merkmale der Erfindung sind der nachfolgenden detaillierten Beschreibung zu entnehmen, in welcher die Erfindung mehr im Detail in Bezug auf die in den beigefügten Zeichnungen dargestellten Ausführungsbeispiele beschrieben wird.

In der Zeichnung zeigen:
- Fig. 1: eine schematische Perspektivansicht von innen eines Teilbereichs der Frontpartie eines Kraftfahrzeugs mit einer erfindungsgemäßen Abdeckung, die zwischen zwei Aufnahmen für Nebelscheinwerfer montiert ist, gemäß einem Ausführungsbeispiel der Erfindung; und
- Fig. 2: eine schematische Perspektivdetailansicht der Abdeckung mit nach hinten weisender Verlängerung des Ausführungsbeispiels aus Fig. 1.

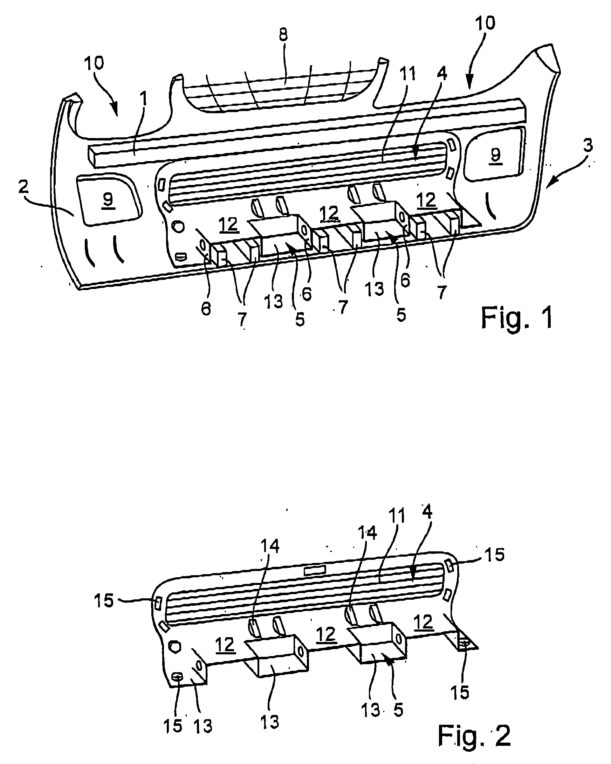

Die Fig. 1 zeigt in einer schematischen Perspektivansicht von innen ausschnittsweise den vorderen Bereich eines Kraftfahrzeugs mit einem Ausführungsbeispiel einer erfindungsgemäßen Abdeckung in Form eines Kühllufteinlassgitters. Unterhalb von Öffnungen 10 für Frontscheinwerfer (nicht dargestellt) und einem mittigen Kühlergrill 8 für den Hauptkühler des Kraftfahrzeugs ist ein Querträger als Stoßfänger 1 hinter der Stoßfängerverkleidung 2 vorgesehen. Der untere Spoilerbereich 3 ist der Bereich der vorderen frontalen Karosserie-Außenhaut, der sich unterhalb der Ebene des Stoßfängers 1 befindet. Anders als der Stoßfänger 1, der eine ausreichende Steifigkeit zum Abstoßen der Beine eines Fußgängers aufweist, ist der Spoilerbereich 3 herkömmlicherweise nicht steif ausgebildet. Ein auftreffender Unterschenkel eines Fußgängers kann daher in diesem Bereich eindringen und zu erheblichen Verletzungen führen. Die erfindungsgemäße Abdeckung 4 ist aus diesem Grunde nicht als einfache Abdeckung lediglich zum Verschließen der frontalen Öffnung im Spoilerbereich 3 vorgesehen, sondern weist eine nach unten und hinten weisende, spezifisch (entsprechend der Innenkontur) geformte Verlängerung 5 zur Versteifung des unteren frontalen Bereichs des Fahrzeugs auf. Die Abdeckung 4 ist bei diesem Ausführungsbeispiel eine Abdeckung zum Vorsehen des Kühllufteinlassgitters 11 direkt unterhalb des Stoßfängers 1 und zwischen den Öffnungen 9 für Nebelscheinwerfer (selbst nicht dargestellt). Die Abdeckung 4 ist mit einer Verlängerung 5 formentsprechend zur Innenseite des Spoilerbereichs 3 bzw. der Stoßfängerverkleidung 2 geformt. Die Verlängerung 5 ist daher eine innenflächig mindestens abschnittsweise anliegende Art Auskleidung, die in diesem Ausführungsbeispiel mit Versteifungsrippen 7 formschlüssig in Eingriff ist, die an der Innenseite der Stoßfängerverkleidung zusätzlich (jedoch nicht notwendigerweise) vorgesehen sind. Auf diese Weise wird eine direkte Anbindung der Stoßfängerverkleidung mit dem versteifenden Verlängerungsabschnitt 5 der erfindungsgemäßen Abdeckung 4 realisiert.

Die rückwärtige Verlängerung 5 weist bei diesem Ausführungsbeispiel flächige Erhebungen 12 und Vertiefungen 13 auf, die entsprechend den längsgerichteten und vorragenden Rippen 7 an der Innenseite der Stoßfängerverkleidung 2 gebildet sind. Dadurch ergeben sich seitliche zusätzliche Abstützflächen 6 der Abdeckung 4 im versteifenden Bereich der Verlängerung 5, die seitlich an den Flanken der Versteifungsrippen 7 anliegen. Die flächigen Erhöhungen und Vertiefungen 12 bilden jedoch außerdem eine Art einseitig geöffnetes Hohlprofil, was zusätzlich die Versteifung der Verlängerung 5 der Abdeckung 4 verbessert. Die Abdeckung 4 selbst ist im Übergang zwischen dem frontalen Kühllufteinlassgitter 11 und der nach hinten weisenden, das heißt L-förmig abkragenden Verlängerung 5 mit längsgerichteten Versteifungsrippen 14 versehen, die den aufragenden Abschnitt des Kühlluftgitters 11 der Abdeckung 4 und den nach unten und nach hinten weisenden Verlängerungsabschnitt 5 überbrücken. Die Befestigung und Montage der Abdeckung 4 an der Stoßfängerverkleidung 2 und an anderen karosserieseitigen Teilen erfolgt bei diesem Ausführungsbeispiel über Befestigungslöcher 15, die in randseitigen Bereichen der Abdeckung 4 vorgesehen sind. Auf Seiten des Kühllufteinlassgitters 11 sind beispielsweise langlochartige Öffnungen vorgesehen, die für ein Einklipsen von Kunststoff-Klemmelementen oder ähnlichem vorgesehen sind. Bodenseitig zur Karosserie des Fahrzeugs hin sind runde Öffnungen vorgesehen, beispielsweise zur Montage mittels Spreiznieten oder Schrauben.

So wird, wie es in Fig. 2 dargestellt ist, ein integrales Versteifungselement zusammen mit einer mittigen Abdeckung der Karosserie - hier einem Kühllufteinlassgitter 11 - bereitgestellt, welches es ermöglicht, den gesamten vorderen unteren Spoilerbereich ohne raumeinnehmende Elemente oder zusätzliche Bauteile effektiv zu versteifen. Die Fußgängersicherheit wird hierdurch erhöht, da ein niedriger Kniebiegewinkel aufgrund der geringen Verformbarkeit dieses Bereiches auf Unterschenkel-Höhe von Fußgängern realisierbar ist. Die Erfindung ist nicht auf das dargestellte Ausführungsbeispiel beschränkt, sondern umfasst alle Ausführungsformen, die in der Reichweite der Ansprüche liegen. Insbesondere kann die Form und Anordnung von Versteifungsrippen und/oder von Abstützflächen und/oder von Erhöhungen / Vertiefungen anders sein als in dem dargestellten Ausführungsbeispiel. Auch die globale Form der Abdeckung 4 ist nicht auf eine hier dargestellte, im wesentlichen in Seitenansicht L-förmige Form beschränkt und kann weitere Abschnitte, beispielsweise in den Seitenbereich hinein, umfassen, beispielsweise im Falle eines Fahrzeuges ohne Nebelscheinwerfer. Die Abdeckung 4 kann zusammen mit ihrer Verlängerung 5 zur Versteifung aus einem Kunststoffmaterial oder auch aus einem Metallblech hergestellt werden. Im letzteren Fall ist die Herstellung kostengünstig mit herkömmlichen Tiefzieh- und Biegemaschinen verwirklichbar. Die Art der Befestigung an der Stoßfängerverkleidung und an den angrenzenden Karosseriebereichen kann auch auf andere als die beschriebene Art und Weise erfolgen, beispielsweise durch Verschweißung oder Verschraubung.

Sämtliche in der Beschreibung, den nachfolgenden Ansprüchen sowie in der Zeichnung dargestellten Merkmale und Elemente können sowohl einzeln als auch in beliebiger Kombination miteinander erfindungswesentlich sein.

## Patentansprüche

1. Front eines Kraftfahrzeugs mit einem Stoßfänger (1), mit einer Stoßfängerverkleidung (2), welche sich mindestens bis in einen unterhalb des Stoßfängers (1) liegenden Spoilerbereich (3) erstreckt, und mit einer Abdeckung (4), welche als Zusatzteil mindestens im mittleren Spoilerbereich (3) an der Stoßfängerverkleidung (2) montierbar ist,
**dadurch gekennzeichnet,**
**dass** die Abdeckung (4) eine bezogen auf das Kraftfahrzeug nach unten und nach hinten weisende Verlängerung (5) aufweist, welche sich mindestens abschnittsweise an der Innenseite der Stoßfängerverkleidung (2) zu deren direkter Anbindung und Versteifung flächig und im wesentlichen formschlüssig erstreckt.

2. Kraftfahrzeugfront gemäß Anspruch 1,
**dadurch gekennzeichnet,**
**dass** die Stoßfängerverkleidung (2) an der Innenseite mit Versteifungsrippen (7) versehen ist.

3. Kraftfahrzeugfront gemäß Anspruch 1 oder 2,
**dadurch gekennzeichnet,**
**dass** die Verlängerung (3) der Abdeckung (4) flächige Vertiefungen (13) und Erhebungen (12) in Richtung der Fahrzeug-Längsachse aufweist, die mit inneren Versteifungsrippen (7) der Stoßfängerverkleidung (2) in Eingriff stehen oder formschlüssig zu diesen aneinander anliegen.

4. Kraftfahrzeugfront gemäß irgendeinem der vorangegangenen Ansprüche,
**dadurch gekennzeichnet,**
**dass** die Verlängerung (5) der Abdeckung (4) Versteifungsrippen (14) an ihrer Oberseite aufweist.

5. Kraftfahrzeugfront gemäß irgendeinem der vorangegangenen Ansprüche,
**dadurch gekennzeichnet,**
**dass** die Verlängerung (5) der Abdeckung (4) zur Versteifung mit Hohlprofilabschnitten (12, 13) versehen ist.

6. Kraftfahrzeugfront gemäß irgendeinem der vorangegangenen Ansprüche,
**dadurch gekennzeichnet,**
**dass** die Abdeckung (4) ein Kühllufteinlassgitter (11) für Zusatz-Kühlaggregate des Kraftfahrzeugs ist.

7. Kraftfahrzeugfront gemäß irgendeinem der vorangegangenen Ansprüche,
**dadurch gekennzeichnet,**
**dass** Befestigungsöffnungen für die Befestigung an der Stoßfängerverkleidung (2) und an karosserieseitigen Trägerbauteilen vorgesehen sind (vorzugsweise mittels Spreiznieten).

8. Kraftfahrzeugfront gemäß irgendeinem der vorangegangenen Ansprüche,
**dadurch gekennzeichnet,**
**dass** die nach hinten weisende Verlängerung (5) der Abdeckung (4) mit Abstützabschnitten (6) zur Abstützung an einem karosserieseitigen Träger des Kraftfahrzeugs versehen ist.
